# EUROPÄISCHE PATENTSCHRIFT

(11) **EP 0 534 147 B1**
(45) Veröffentlichungstag und Bekanntmachung des Hinweises auf die Patenterteilung: **22.05.1996**
(21) Anmeldenummer: 92114396.2
(22) Anmeldetag: 24.08.1992
(51) Int. Cl.: H01S 3/00, G02F 2/00

(54) **Optischer Frequenzkammgenerator**
Optical frequency comb generator
Générateur optique d'un peigne de fréquences

(30) Priorität: 27.09.1991 DE 4132300
(43) Veröffentlichungstag der Anmeldung: 31.03.1993
(73) Patentinhaber: SIEMENS AKTIENGESELLSCHAFT, D-80333 München (DE)
(72) Erfinder: Noll, Bernd, Dipl.-Ing., W-8000 München 21 (DE); Auracher, Franz, Dr., W-8021 Baierbrunn (DE); Ebberg, Alfred, Dr., W-8000 München 83 (DE)

(56) Entgegenhaltungen:
- EP-A- 0 385 697
- ELECTRONICS LETTERS. Bd. 24, Nr. 16, 4. August 1988, STEVENAGE GB; Seiten 1000-1001, K. ARAI et al.: "New sensitivity-enhancing scheme for a fibre-optic interferometer utilising two optical loops"

## Beschreibung

Die Erfindung betrifft einen optischen Kammgenerator nach dem Oberbegriff des Patentanspruchs 1.

Zur Stabilisierung der Sendelaser eines kohärenten optischen Vielkanalübertragungssystems wird ein optischer Kammgenerator benötigt, der aus dem Licht eines Referenzlasers einen Satz äquidistanter Referenzfrequenzen erzeugt, so daß je ein Sendelaser an je eine Referenzfrequenz angebunden werden kann.

Eine mögliche Realisierung eines solchen Kammgenerators ist in Electron. Lett. 26 (1990), S. 28-30 beschrieben. Bei diesem Kammgenerator wird das Licht des Referenzlasers über einen Faserkoppler in einen ringförmig geschlossenen Faser-Lichtwellenleiter eingespeist. Ein Einseitenbandmodulator versetzt die Frequenz des Lichts um eine bestimmte Frequenzverschiebung. Ein Teil des Lichts wird durch den Faserkoppler aus dem Wellenleiter ausgekoppelt, der Rest durchläuft den Ring abermals, wird nochmals frequenzversetzt usw.. Werden die Umlaufverluste durch einen optischen Verstärker kompensiert, so hängt die erzielbare Breite des Kammspektrums nur vom Frequenzgang des Einseitenbandmodulators, des optischen Verstärkers und des Faserkopplers ab. Ein optischer Isolator verhindert lediglich die Ausbreitung des Lichts im Wellenleiter in einer ungewünschten Umlaufrichtung.

Ein prinzipiell ähnlicher Kammgenerator ist in der EP-A-0 385 697 beschrieben.

Einseitenbandmodulatoren mit hoher Klirrdämpfung von beispielsweise mehr als 30 dB existieren bisher nur als akustooptische Modulatoren, beispielsweise in Form von Bragg-Zellen, bei denen jedoch die maximale Betriebsfrequenz nur wenige GHz beträgt. Darüberhinaus sinkt der Konversionswirkungsgrad , definiert durch das Verhältnis zwischen der Amplitude des um die bestimmte Frequenzverschiebung frequenz; verschobenen Signals zur Amplitude des Lichts vor dem Einseitenbandmodulator, bei hohen Frequenzen ab und beträgt nur noch wenige Prozent für Frequenzen von mehr als 1 GHz.

Elektrooptische Einseitenbandmodulatoren erreichen mühelos Betriebsfrequenzen von mehr als 10 GHz, jedoch ist eine Klirrdämpfung von mehr als 30 dB bei gleichzeitig hohem Konversionswirkungsgrad von mehr als 0,9 nur für extrem kleine Fertigungsstreuungen zu erreichen.

Erzeugt der Einseitenbandmodulator mehrere Modulationsseitenbänder, so kommt es im ringförmig geschlossenen Wellenleiter zur Überlagerung von Teilwellen derselben Frequenz aus verschiedenen Umlaufzyklen. Abhängig von der Anregung der unerwünschten Modulationsseitenbänder, der Phasenverschiebung zwischen den einzelnen Teilwellen, der die Frequenzverschiebung bestimmenden Modulationsfrequenz des Einseitenbandmodulators sowie der für einen Umlauf im Wellenleiter benötigten Umlaufzeit sind die Leistungen in den einzelnen Spektrallinien sehr unterschiedlich, es können einzelne Spektrallinien verschwinden oder der ringförmig geschlossene Wellenleiter kann sogar anschwingen.

Das Problem kann dadurch gelöst werden, daß der Referenzlaser gepulst wird (siehe z.B. EFOC/LAN Konferenzband, 1990, Seiten 314-3199), wobei die Impulsdauer nicht größer als die Umlaufzeit und der Impulsabstand so groß gewählt werden soll, daß im Ring keine Interferenz von Licht aus benachbarten Impulsen stattfindet. Die mittlere Leistung in jeder Spektrallinie reduziert sich jedoch entsprechend dem Tastverhältnis , so daß der zur sicheren Frequenzregelung benötigte Signal-Rauschabstand unter Umständen nicht mehr erreicht werden kann.

Aus Electron. Lett., Bd. 24, Nr. 16, 04.08.88, Seiten 1000-1001 ist ein optisches Interferometer bekannt, das mit einem Kammgenerator arbeitet, der ähnlich wie die vorstehend beschriebenen Kammgeneratoren aufgebaut ist und die Besonderheit aufweist, daß die Länge des ringförmig geschlossenen Wellenleiters so groß bemessen ist, daß die Umlaufzeit des im Wellenleiter umlaufenden Lichts größer als die bestimmte Kohärenzzeit der kohärenten Referenzlichtquelle ist, wodurch Leistungsschwankungen von Spektrallinien am Ausgang des Interferometers reduziert werden können.

Ein solcher Kammgenerator kann vorteilhafterweise mit nichtidealem Einseitenbandmodulator kontinuierlich betrieben werden, ohne daß die Leistungsschwankungen der Spektrallinien des Kammspektrums ein bestimmtes Maß übersteigen. Das Kammspektrum reagiert empfindlich auf Änderungen der Phase des Lichts bei einem Umlauf im Wellenleiter. Diese Phase sollte daher möglichst konstant gehalten werden. Die Empfindlichkeit des Kammspektrums auf Änderungen der Phase des Lichts bei einem Umlauf im Wellenleiter wird von dem Produkt aus der Frequenzverschiebung und der Umlaufzeit des Lichts im Wellenleiter bestimmt. Wird dieses Produkt gleich k·π gewählt, wobei k eine beliebig wählbare ganze Zahl ist, bewirken Änderungen der Phase des Lichts bei einem Umlauf im Wellenleiter starke Amplitudenschwankungen einer Spektrallinie, die um so stärker sind, je weiter entfernt die Frequenz dieser Spektrallinie von der Referenzfrequenz liegt. Diese Amplitudenschwankungen werden minimal, wenn der Kammgenerator erfindungsgemäß nach Maßgabe des Anspruchs 1 oder erfindungsgemäß nach Maßgabe des Anspruchs 2 realisiert wird.

Zusätzlich kann die Phase des Lichts bei einem Umlauf auch gezielt verändert werden, wenn der Kammgenerator gemäß Anspruch 3 realisiert wird. Durch die dort angegebene gesonderte Modulation kann die optische Länge des ringförmig geschlossenen Wellenleiters vorteilhafterweise so schnell moduliert werden, daß die Amplitudenschwankungen von der Regelschaltung nicht mehr wahrgenommen werden.

Die gesonderte Modulation kann nach Anspruch 4 mit Hilfe eines Phasenmodulators, der vorzugsweise sinusförmig angesteuert wird, erreicht werden. Die Frequenz dieser Phasenmodulation sollte größer als die Bandbreite der Frequenzregelung, aber deutlich kleiner als die Linienbreite der von der kohärenten Referenzlichtquelle erzeugten Spektrallinie sein. Der Phasenhub der zusätzlichen Frequenzmodulation sollte in der Größenordnung von π/2 liegen.

Der gleiche Effekt wird erzielt, wenn gemäß Anspruch 5 die kohärente Referenzlichtquelle schwach frequenzmoduliert wird, wobei für Frequenz und Stärke dieser gesonderten Frequenzmodulation analoge Bedingungen wie bei der gesonderten Phasenmodulation gelten.

Die Erfindung wird anhand der Figuren in der nachfolgenden Beschreibung beispielhaft näher erläutert. Es zeigen:
- Figur 1: ein Ausführungsbeispiel eines erfindungsgemäßen Kammgenerators,
- Figur 2: eine Modifikation des Kammgenerators nach Figur 1, bei dem im Wellenleiter ein Phasenmodulator angeordnet ist,
- Figur 3: eine Modifikation des Kammgenerators nach Figur 1, bei dem die Referenzlichtquelle frequenzmodulierbar ist, und
- Figur 4: ein Anwendungsbeispiel eines erfindungsgemäßen Kammgenerators auf ein kohärent optisches Vielkanal-Übertragungsssystem.

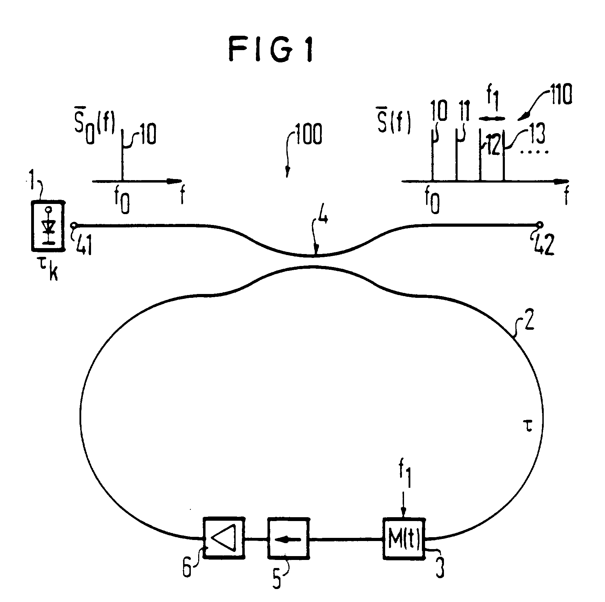

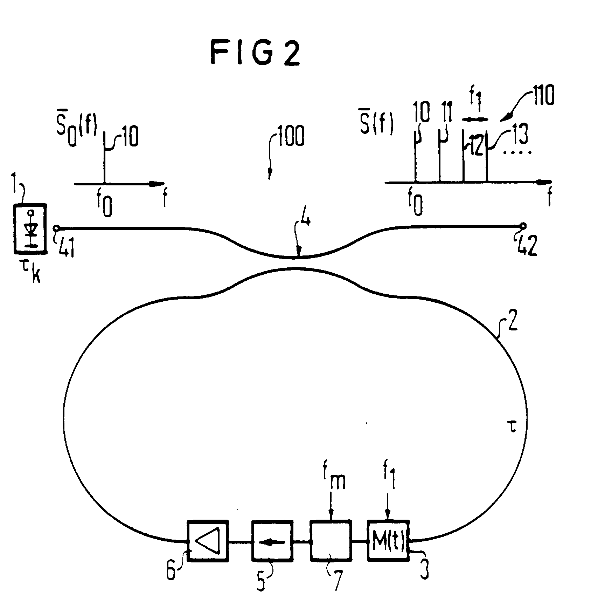

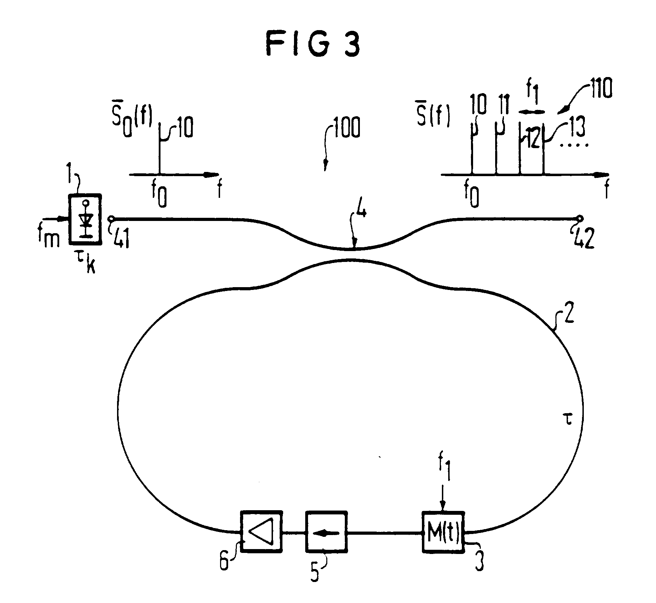

Bei dem Kammgenerator 100 nach Figur 1 erzeugt die kohärent optische Referenzlichtquelle 1 in Form eines Referenzlasers mit der Kohärenzzeit τₖ kohärentes Licht, dessen über der Frequenz f aufgetragenes Frequenzspektrum eine einzige Spektrallinie 10 bei der optischen Referenzfrequenz f₀ aufweist. Die mittlere Leistung dieser Spektrallinie 10 ist mit S₀(f) bezeichnet.

Das Licht dieser Spektrallinie 10 wird in einen optischen 3dB-Faserrichtkoppler über ein Eingangstor 41 dieses Kopplers 4 eingekopDelt und tritt im Koppler 4 in dem ringförmig geschlossenen oDtischen Faserwellenleiter 2 ein, in welchem das eingekoppelte Licht im Uhrzeigersinn mit der Umlaufzeit τ umläuft. Ein Teil des umlaufenden Lichts wird durch den Koppler 4 aus dem ringförmig geschlossenen Wellenleiter 2 zu einem Ausgangstor 42 dieses Kopplers 4 ausgekoppelt, der Rest läuft weiter im Wellenleiter 2 um.

Im Wellenleiter 2 ist der Einseitenbandmodulator 3 angeordnet, der das im Wellenleiter umlaufende Licht um die optische Frequenzverschiebung f₁ frequenzverschiebt. Diese Frequenzverschiebung f₁ erfolgt bei jedem durch die Umlaufzeit τ bestimmten Umlaufzyklus. Das in den Wellenleiter 2 eingekoppelte Licht der Referenzfrequenz f₀ wird im Einseitenbandmodulator 3 um die Frequenzverschiebung f₁ frequenzverschoben, so daß das aus dem Einseitenbandmodulator 3 austretende und im Wellenleiter 2 weiterlaufende Licht eine Frequenz von f₀+f₁ hat. Trifft dieses im Wellenleiter 2 umlaufende Licht der Frequenz f₀+f₁ wieder auf den Einseitenbandmodulator 3, wird dieses Licht im Modulator 3 wieder um f₁ frequenzverschoben, so daß das aus dem Modulator 3 austretende Licht die Freauenz f₀+2f₁ aufweist. Nach n Umläufen hat das umlaufende Licht die Frequenz f₀+nf₁, wobei n eine beliebige natürliche Zahl bedeutet. Das Ergebnis ist, daß am Ausgangstor 42 Licht mit einem Kammspektrum 110 austritt, dessen Spektrallinien 10, 11, 12, 13, ... der Reihe nach die Frequenzen f₀, f₀+f₁, f₀+2f₁, f₀+3f₁ ...aufweisen. Die mittlere Leistung jeder dieser Spektrallinien 10, 11, 12, 13, ... ist mit S(f) bezeichnet.

Im Wellenleiter 2 ist neben dem Einseitenbandmodulator 3 ein optischer Isolator 5 und ein optischer Verstärker 6 angeordnet, deren Sinn und Zweck eingangs bereits beschrieben worden ist.

Die Länge des ringförmig geschlossenen Wellenleiters 2 ist so groß gewählt, daß die Umlaufzeit τ des im Wellenleiter 2 umlaufenden Lichts größer als die bestimmte Kohärenzzeit τₖ der kohärenten Referenzlichtquelle 1 ist.

Abgesehen davon kann der Einseitenbandmodulator 3 so ausgebildet sein, daß er nur Seitenbänder mit gleichem Vorzeichen der Frequenzverschiebung f₁ erzeugt, und daß der Betrag |f₁| der Frequenzverschiebung f₁ derart gewählt ist, daß |f₁|·τ= π/2+kπ gilt, wobei k eine beliebig wählbare ganze Zahl bedeutet.

Der Einseitenbandmodulator kann auch so ausgebildet sein, daß er Seitenbänder mit positiver und negativer Frequenzverschiebung +f₁ und -f₁ erzeugt, und daß der Betrag |f₁| der Freauenzverschiebung +f₁ -f₁ derart gewählt ist, daß |f₁|·τ = π/4+kπ gilt, wobei k eine beliebig wählbare ganze Zahl ist.

Die in Figur 2 gezeigte Modifikation des Kammgenerators 100 nach Figur 1 unterscheidet sich von dem Kammgenerator 100 nach Figur 1 lediglich dadurch, daß im ringförmig geschlossenen Wellenleiter 2 ein Phasenmodulator 7 angeordnet ist, mit welchem die Frequenz des im Wellenleiter umlaufenden Lichts gesondert phasenmodulierbar ist. Vorzugsweise wird der Phasenmodulator 7 sinusförmig angesteuert. Die Frequenz fₘ dieser gesonderten Modulation sollte größer als die Bandbreite der Frequenzregelung, aber deutlich kleiner als die Linienbreite der Spektrallinie 10 der Referenzlichtquelle 1 sein. Der Phasenhub sollte in der Größe von ± π/2 liegen.

Mit der in Figur 3 gezeigten Modifikation des Kammgenerators 100 nach Figur 1 wird der gleiche Effekt erreicht, wie mit der Modifikation nach Figur 2. Der Kammgenerator 100 nach Figur 3 unterscheidet sich von dem Kammgenerator 100 nach Figur 1 und von dem Kammgenerator nach Figur 2 dadurch, daß die kohärente Referenzlichtquelle 1 mit der Frequenz fₘ der gesonderten Modulation frequenzmodulierbar ist, wodurch der Phasenmodulator 7 der Modifikation nach Figur 2 entfallen kann. Die Lichtquelle 1 sollte schwach frequenzmoduliert werden, wobei für Frequenz und Stärke dieser Frequenzmodulation analoge Bedingungen wie bei der Phasenmodulation mit dem Phasenmodulator 7 der Ausführungsform nach Figur 2 gelten.

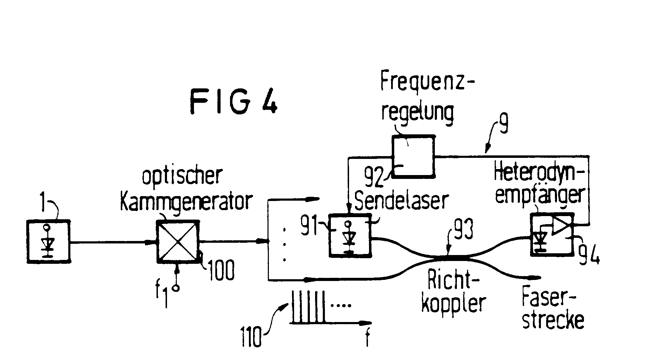

Bei dem in Figur 4 gezeigten Anwendungsbeispiel des erfindungsgemäßen Kammgenerators 100 auf ein kohärent optisches Vielkanalübertragungssystem 9 ist je ein Spektrallinie des vom erfindungsgemäßen Kammgenerator 100 erzeugten Kammspektrums 110 je einem Heterodynempfänger 94 zugeordnet. Das Licht dieser Spektrallinie regt einen diesem Heterodynempfänger allein zugeordneten Sendelaser 91 an. Das Licht dieses Sendelasers 91 und das Licht dieser Spektrallinie werden in einem optischen Richtkoppler 93 überlagert und in dieser Form dem Heterodynempfänger 94 zur Verarbeitung zugeleitet, wobei vom Heterodynempfänger 94 aus eine Frequenzregelung des Sendelasers 91 über eine Frequenzregelung 92 erfolgt.

## Patentansprüche

1. Optischer Kammgenerator (100) zum Erzeugen eines Kammspektrums aus bei äquidistanten optischen Frequenzen liegenden Spektrallinien (10, 11, 12, 13, ...) aus einer von einer kohärenten, eine bestimmte Kohärenzzeit (τₖ) aufweisenden Referenzlichtquelle (1) erzeugten und bei einer bestimmten optischen Referenzfrequenz (f₀) liegenden Spektrallinie (10), mit
einem ringförmig geschlossenen optischen Wellenleiter (2), in den das von der Referenzlichtquelle (1) abgegebene Licht der optischen Referenzfrequenz (f₀) eingekoppelt wird und aus dem ein Teil des in den Wellenleiter (2) eingekoppelten und im Wellenleiter (2) mit einer bestimmten Umlaufzeit (τ) umlaufenden Lichts ausgekoppelt wird und, einem im Wellenleiter (2) angeordneten Einseitenbandmodulator (3), der das im Wellenleiter (2) umlaufende Licht bei jedem Umlauf um eine bestimmte optische Frequenzverschiebung (f₁) versetzt, wobei
die Länge des ringförmig geschlossenen Wellenleiters (2) so groß bemessen ist, daß die Umlaufzeit (τ) des im Wellenleiter (2) umlaufenden Lichts größer als die bestimmte Kohärenzzeit (τₖ) der kohärenten Referenzlichtquelle (1) ist, **dadurch gekennzeichnet**, daß der Einseitenbandmodulator (3) nur Seitenbänder mit gleichem Vorzeichen der Frequenzverschiebung (f₁) erzeugt und daß der Betrag |f₁| der Freuquenzverschiebung (f₁) derart gewählt ist, daß das Produkt |f₁|·τ aus diesem Betrag |f₁| und der Umlaufzeit τ des Lichts im Wellenleiter (2) gleich π/2 + kπ ist, wobei k eine beliebig wählbare ganze Zahl bedeutet.

2. Optischer Kammgenerator (100) zum Erzeugen eines Kammspektrums aus bei äquidistanten optischen Frequenzen liegenden Spektrallinien (10, 11, 12, 13, ...) aus einer von einer kohärenten, eine bestimmte Kohärenzzeit (τₖ) aufweisenden Referenzlichtquelle (1) erzeugten und bei einer bestimmten optischen Referenzfrequenz (f₀) liegenden Spektrallinie (10), mit
einem ringförmig geschlossenen optischen Wellenleiter (2), in den das von der Referenzlichtquelle (1) abgegebene Licht der optischen Referenzfrequenz (f₀) eingekoppelt wird und aus dem ein Teil des in den Wellenleiter (2) eingekoppelten und im Wellenleiter (2) mit einer bestimmten Umlaufzeit (τ) umlaufenden Lichts ausgekoppelt wird und, einem im Wellenleiter (2) angeordneten Einseitenbandmodulator (3), der das im Wellenleiter (2) umlaufende Licht bei jedem Umlauf um eine bestimmte optische Frequenzverschiebung (f₁) versetzt, wobei
die Länge des ringförmig geschlossenen Wellenleiters (2) so groß bemessen ist, daß die Umlaufzeit (T) des im Wellenleiter (2) umlaufenden Lichts größer als die bestimmte Kohärenzzeit (τₖ) der kohärenten Referenzlichtquelle (1) ist, **dadurch gekennzeichnet**, daß der Einseitenbandmodulator (3) Seitenbänder mit positiver und negativer Frequenzverschiebung (f₁, -f₁) erzeugt und daß der Betrag |f₁| der Frequenzverschiebung (f₁, -f₁) derart gewählt ist, daß das Produkt |f₁|·τ aus diesem Betrag |f₁| und der Umlaufzeit τ des Lichts im Wellenleiter (2) gleich π/4 + kπ ist, wobei k eine beliebig wählbare ganze Zahl ist.

3. Generator nach einem der vorhergehenden Ansprüche,
**dadurch gekennzeichnet**, daß das im Wellenleiter (2) umlaufende Lichts gesondert moduliert wird.

4. Generator nach Anspruch 3,
**dadurch gekennzeichnet**, daß im Wellenleiter (2) ein Phasenmodulator (7) angeordnet, mit welchem die Phase des umlaufenden Lichts gesondert phasenmoduliert wird.

5. Generator nach Anspruch 3 oder 4,
**dadurch gekennzeichnet**, daß die kohärente Referenzlichtquelle (1) frequenzmoduliert wird.

## Claims

1. Optical comb generator (100) for generating a comb spectrum composed of spectral lines (10, 11, 12, 13, ...) situated at equidistant optical frequencies from a spectral line (10) which is generated by -a coherent reference light source (1) having a specific coherence time (τₖ) and is situated at a specific optical reference frequency (f₀), the generator comprising an annularly closed optical waveguide (2) into which the light, output from the reference light source (1), of the optical reference frequency (f₀) is coupled and from which a portion of the light, which is coupled into the waveguide (2) and circulates in the waveguide (2) with a specific circulation time (τ), is coupled out, and comprising a single sideband modulator (3) which is arranged in the waveguide (2) and offsets the light, circulating in the waveguide (2), by a specific optical frequency shift (f₁) upon every circulation, the length of the annularly closed waveguide (2) being dimensioned so large that the circulation time (τ) of the light circulating in the waveguide (2) is longer than the specific coherence time (τₖ) of the coherent reference light source (1), characterized in that the single sideband modulator (3) generates only sidebands having the same sign of the frequency shift (f₁), and in that the absolute value |f₁| of the frequency shift (f₁) is selected such that the product |f₁|·τ of this absolute value |f₁| and the circulation time τ of the light in the waveguide (2) is equal to π/2 + kπ, k signifying an arbitrarily selectable whole number.

2. Optical comb generator (100) for generating a comb spectrum composed of spectral lines (10, 11, 12, 13, ...) situated at equidistant optical frequencies from a spectral line (10) which is generated by a coherent reference light source (1) having a specific coherence time (τₖ) and is situated at a specific optical reference frequency (f₀), the generator comprising an annularly closed optical waveguide (2) into which the light, output from the reference light source (1), of the optical reference frequency (f₀) is coupled and from which a portion of the light, which is coupled into the waveguide (2) and circulates in the waveguide (2) with a specific circulation time (τ), is coupled out, and comprising a single sideband modulator (3) which is arranged in the waveguide (2) and offsets the light, circulating in the waveguide (2), by a specific optical frequency shift (f₁) upon every circulation, the length of the annularly closed waveguide (2) being dimensioned so large that the circulation time (τ) of the light circulating in the waveguide (2) is longer than the specific coherence time (τₖ) of the coherent reference light source (1), characterized in that the single sideband modulator (3) generates sidebands with positive and negative frequency shifts (f₁, -f₁), and in that the absolute value |f₁| of the frequency shift (f₁, -f₁) is selected such that the product |f₁|·τ of this absolute value |f₁| and the circulation time τ of the light in the waveguide (2) is equal to π/4 + kπ, k being an arbitrarily selectable whole number.

3. Generator according to one of the preceding claims, characterized in that the light circulating in the waveguide (2) is modulated separately.

4. Generator according to Claim 3, characterized in that there is arranged in the waveguide (2) a phase modulator (7) by means of which the phase of the circulating light is separately phase-modulated.

5. Generator according to Claim 3 or 4, characterized in that the coherent reference light source (1) is frequency-modulated.

## Revendications

1. Générateur optique d'un peigne de fréquences (100), destiné à la génération d'un spectre de peigne à partir de raies spectrales (10, 11, 12, 13...) situées à des fréquences optiques équidistantes, à partir d'une raie spectrale (10) générée à partir d'une source de lumière de référence (1) présentant un temps de cohérence déterminé (τₖ) et située à une fréquence de référence optique déterminée (f₀), comportant
un guide d'ondes optique annulaire fermé (2) dans lequel est injectée la lumière de la fréquence de référence optique (f₀) délivrée par la source de lumière de référence (1) et duquel est prélevée une partie de la lumière injectée dans le guide d'ondes (2) et une partie de la lumière circulant dans le guide d'ondes (2) avec un temps de circulation (τ) déterminé, ainsi qu'un modulateur à bande latérale unique (3) disposé dans le guide d'ondes (2) qui, à chaque passage, décale la lumière circulant dans le guide d'ondes (2) à concurrence d'un déplacement de fréquence optique (f₁) déterminé, la longueur du guide d'ondes annulaire fermé (2) étant dimensionnée de sorte que le temps de circulation (τ) de la lumière circulant dans le guide d'ondes (2) soit supérieur au temps de cohérence déterminé (τₖ) de la source de lumière de référence cohérente (1), caractérisé en ce que le modulateur à bande latérale unique (3) ne génère que des bandes latérales présentant le même signe de déplacement de fréquence (f₁) et en ce que la valeur absolue |f₁| du déplacement de fréquence (f₁) soit choisie de sorte que le produit |f₁|·τ de cette valeur absolue |f₁| et du temps de circulation τ de la lumière dans le guide d'ondes (2) soit égal à π/2 + kπ, k étant un nombre entier qui peut être choisi quelconque.

2. Générateur optique d'un peigne de fréquences (100), destiné à la génération d'un spectre de peigne à partir de raies spectrales (10, 11, 12, 13...) situées à des fréquences optiques équidistantes, à partir d'une raie spectrale (10) générée à partir d'une source de lumière de référence (1) présentant un temps de cohérence déterminé (τ_{K}) et située à une fréquence de référence optique déterminée (f₀), comportant
un guide d'ondes optique annulaire fermé (2) dans lequel est injectée la lumière de la fréquence de référence optique (f₀) délivrée par la source de lumière de référence (1) et duquel est prélevée une partie de la lumière injectée dans le guide d'ondes (2) et une partie de la lumière circulant dans le guide d'ondes (2) avec un temps de circulation (τ) déterminé, ainsi qu'un modulateur à bande latérale unique (3) disposé dans le guide d'ondes (2) qui, à chaque passage, décale la lumière circulant dans le guide d'ondes (2) à concurrence d'un déplacement de fréquence optique (f₁) déterminé, la longueur du guide d'ondes annulaire fermé (2) étant dimensionnée de sorte que le temps de circulation (τ) de la lumière circulant dans le guide d'ondes (2) soit supérieur au temps de cohérence déterminé (τₖ) de la source de lumière de référence cohérente (1), caractérisé en ce que le modulateur à bande latérale unique (3) génère des bandes latérales présentant un déplacement de fréquence positif et négatif (f₁-f₁) et en ce que la valeur absolue |f₁| du déplacement de fréquence (f_{1'}-f₁) soit choisie de sorte que le produit |f₁|·τ de cette valeur absolue |f₁| et du temps de circulation τ de la lumière dans le guide d'ondes (2) soit égal à π/4 + kπ, k étant un nombre entier qui peut être choisi quelconque.

3. Générateur selon l'une des revendications précédentes, caractérisé en ce que la lumière circulant dans le guide d'ondes (2) est modulée séparément.

4. Générateur selon la revendication 3, caractérisé en ce que le guide d'ondes (2) comporte un modulateur de phase (7) qui module séparément en phase la phase de la lumière circulante.

5. Générateur selon la revendication 3 ou 4, caractérisé en ce que la source de lumière de référence cohérente (1) est modulée en fréquence.
